# EUROPEAN PATENT APPLICATION

(11) **EP 2 446 853 A1**
(43) Date of publication of application: **02.05.2012**
(21) Application number: 11187167.9
(22) Date of filing: 28.10.2011
(51) Int. Cl.: A61C 1/18, A61C 13/15, A61C 1/08, A61B 18/20

(54) **Multipurpose handpieces for dental units and the like**

(30) Priority: 29.10.2010 IT VR20100207
(71) Applicant: Creation S.r.l., 37121 Verona (IT)
(72) Inventor: Resch, Alfred Hans, 37121 Verona (DE); Resch, Alessandro, 37121 Verona (IT)
(74) Representative: Sandri, Sandro

(57) **Abstract**

Instrumentation consisting of handpieces for units for dentists, doctors or paramedics, such as dermatologists or the like, in which the central body or handpiece (10) can be connected to interchangeable multipurpose terminals (11) and in that the handpiece (10) consists of a rear part that houses a capsule (12) connected to the power cable and a front part (13) that houses the capsule (14) which allows attachment to the terminal (11) by means of a connector (15), these terminals (11) comprising a lens unit (16') which receives laser beams from an optic fibre(17) that passes through the body (10) entering the terminal (11) from the power cable connected to the capsule (12), the optic fibre(17) transmitting the laser signal whose source consists of a diode generating a polarised laser light beam, said terminals (11) being of various types and interchangeable according to the application.

## Description

This invention concerns instrumentation consisting of interchangeable multipurpose handpieces for units for dentists, doctors or paramedics, such as dermatologists or the like.

More specifically, this invention refers to a unit for dentists, doctors or paramedics, comprising electronic equipment designed for medical applications, mainly for the dentistry sector, but which could also be used in other medical or paramedical clinics.

The equipment was designed to also function with a dedicated power supply which allows its use without being connected to a dental unit.

The equipment substantially consists of an electronic apparatus designed to control a diode generator of a polarised laser light beam that, conveyed in an appropriate optic fibre, can be used to carry out surgical operations on soft tissues and other particular medical or beauty treatments. The particularity of this equipment is that the instrumentation can be installed on a dental unit.

The apparatus is equipped with interchangeable tips that make it possible to obtain the following functions:
- A photopolymerizing light;
- A biostimulation and whitening light;
- A diode laser;
- A white light to illuminate the working area;
- A chromotherapy light.

### BACKGROUND ART

It is known that the dental unit is the most important instrument for a dentist's studio, representing the basis for the dentist's work and facilitating dental procedures but is also the first impact point for the patient. The quality and reliability of this instrument are therefore particularly important.

The current requirement expressed by professional dentists is the combination of multiple solutions in a single working instrument that offers the best performance, ergonomics, safety of a valid hygiene system and total quality which is translated in absolute reliability.

The units currently produced normally satisfy this requirement of professionals who want the best that current technology can provide, together with a modern design and easy interaction between dentist - patient - assistant.

Traditional dental units consist of an ergonomic chair combined with a support column on which the operational unit, the light and, if required, a monitor are located, to provide the dentist's studio with the best technology available, designed to offer immediate, intuitive and easy to manage functioning.

Dental units are generally equipped with arms to support the operational devices, these arms offering a wide range of movement and perfect equilibrium, making it possible to easily reach the best working position.

In traditional units the well balanced arm provides a pleasant sensation of weightlessness of the instrument and excellent lateral mobility of the handpiece, while the power cable of the instruments is sufficiently elongated.

According to the most recent designs of dental units, the instrumentation is presented in a harmonious, reassuring and extremely relaxed way for the patient, comprising membrane pushbuttons and displays that allow very easy management of all the main functions, with the working status of the unit and the instruments always being under control.

Dental units currently comprise a working unit on which several instruments are installed, each one connected to its own supply of power, air and water, delivered through respective conduits.

Each supply cable is connected to the respective instrument, which can consist of turbine handpieces, air and water supply devices, all individually installed with the possibility of replacing just the tips or terminals for cleaning and disinfection operations.

The fact that each handpiece is installed on its own supply cable limits the range of operations that can be carried out by the operator, who must change from one to another of the various instruments in order to use them and can only use the ones installed on the unit.

In view of these problems, it would instead be desirable for the user to be able to use a set of different types of handpieces, for example the laser type with interchangeable heads for a wide variety of functions and for treatments of various types, and this is in fact the objective of this invention.

### DESCRIPTION OF THE INVENTION

This invention concerns instrumentation consisting of interchangeable multipurpose handpieces for units for dentists, doctors or paramedics, such as dermatologists or the like, the instrumentation consisting of multipurpose interchangeable handpieces designed to eliminate or at least reduce the drawbacks indicated above regarding the limited versatility of the instrumentation currently used.

The invention also proposes to provide a unit for dentists' studios or the like, whose instrumentation consists of multipurpose interchangeable handpieces which, in addition to the fundamental characteristic of versatility, make it possible to exploit and use new functions that were formerly connected to special tools or equipment independent of the unit.

This is achieved by means of a unit for dentists' studios or the like, equipped with instrumentation consisting of multipurpose interchangeable handpieces whose features are described in the main claim.

The dependent claims of the solution in question describe advantageous embodiments of the invention.

The main advantages of this solution, in addition to those due to its versatility, concern the fundamental aspect of the interchangeability of the instruments available.

A second important aspect is the rapidity, the ease and the simplicity involved in the replacement of the individual heads, which use a single source, can satisfy a wide range of requirements in the field of photopolymerization, biostimulation and whitening, the use of diode laser and chromotherapy, and other possible used in similar or related sectors.

The electronic equipment substantially consists, in fact, of an electronic apparatus designed to control a diode generator of a polarised laser light beam that, directed into an appropriate optic fibre, can be used to carry out surgical operations on soft tissues and other particular medical or beauty treatments, with the particular feature of being a device that can be installed on a dental unit.

The apparatus according to the invention is equipped with interchangeable tips that make it possible to obtain the following functions:
a) a photopolymerizing light;
b) a biostimulation and whitening light;
c) a diode laser;
d) a white light to illuminate the working area;
e) a chromotherapy light.

### DESCRIPTION OF THE DRAWINGS

Other features and advantages of the invention will become clear on reading the description given below of one embodiment, provided as a non-binding example, with the help of the accompanying drawings, in which:
- figure 1 represents the view of a collimator according to the invention, which is one of the possible interchangeable instruments or tips for biostimulation;
- figure 2 is a schematic partially transparent side view of the handpiece which holds the aforesaid collimator;
- figure 3 represents a front view of the handpiece of the previous figure;
- figures 4 to 8 are schematic views showing the LED heads or tips for the polymerizer, white light and polychromy handpiece;
- figures 9, 10 and 11 show schematic views of the combination of the LED heads and white light or polychromy;
- figures 12 and 13 are schematic views showing the use of a fibre laser light from the side and the front, respectively;

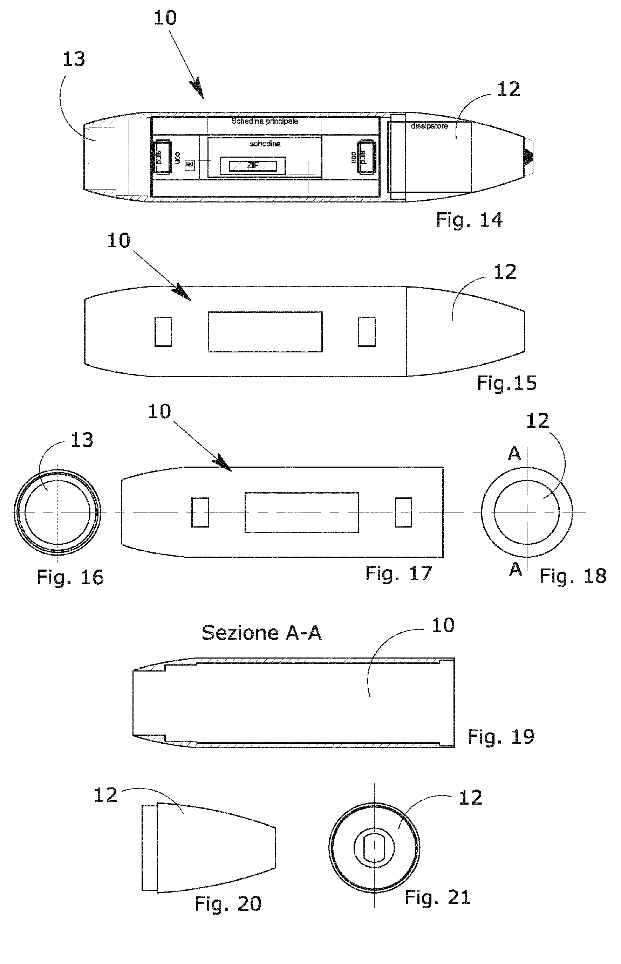

- figures 14 to 21 are schematic views showing the construction of an interchangeable head or tip;
- figures 22 to 24 are schematic views of the rear part of the terminal, that is to say of the respective coupling with the handpiece;
- figures 25 and 26 are schematic views showing the rear coupling inserted in the front part of the handpiece;
- figure 27 is a schematic view of the handpiece on which the interchangeable terminal is coupled;
- figure 28 shows the various types of interchangeable terminals or tips;
- figures 29 to 33 are schematic views showing some details of the couplings between the handpieces, the grip and the power cable;

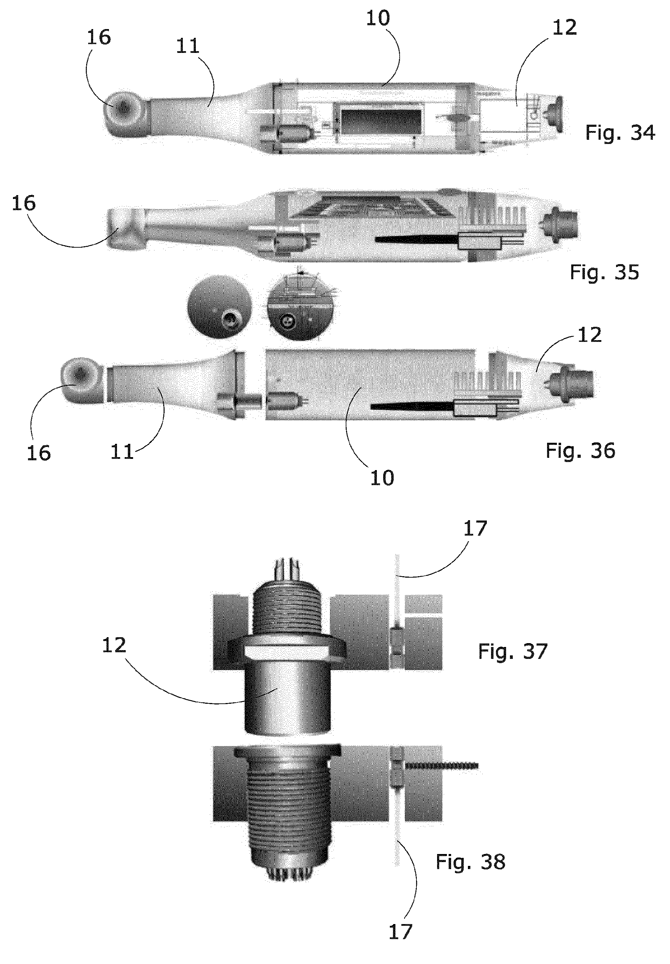

- figures 34 to 36 are schematic views showing the construction of laser handpiece coupled with its support;
- figures 37 and 38 show schematic views of an example of the coupling between the grip and the supply cable.

### DESCRIPTION OF ONE EMBODIMENT OF THE INVENTION

With reference to the accompanying figures, and as stated above, the electronic equipment according to the invention was designed for medical applications mainly but not exclusively in the dentistry sector, and consists of an electronic apparatus designed to control a diode generator of a polarised laser light beam that, directed into an appropriate optic fibre, can be used to carry out surgical operations on soft tissues and other particular medical or beauty treatments, with the particular feature of being a device that can be installed on a dental unit. The apparatus is equipped with interchangeable tips that make it possible to obtain the following functions:
a) a photopolymerizing light;
b) a biostimulation and whitening light;
c) a diode laser;
d) a white light to illuminate the working area;
e) a chromotherapy light.

According to the invention, this device substantially consists of a central body 10 and an interchangeable terminal part or tip 11.

The central body 10 consists of a rear part on which a capsule 12 is coupled and connected to the power cable and a front part 13 which houses the capsule 14 which allows coupling to the terminal 11.

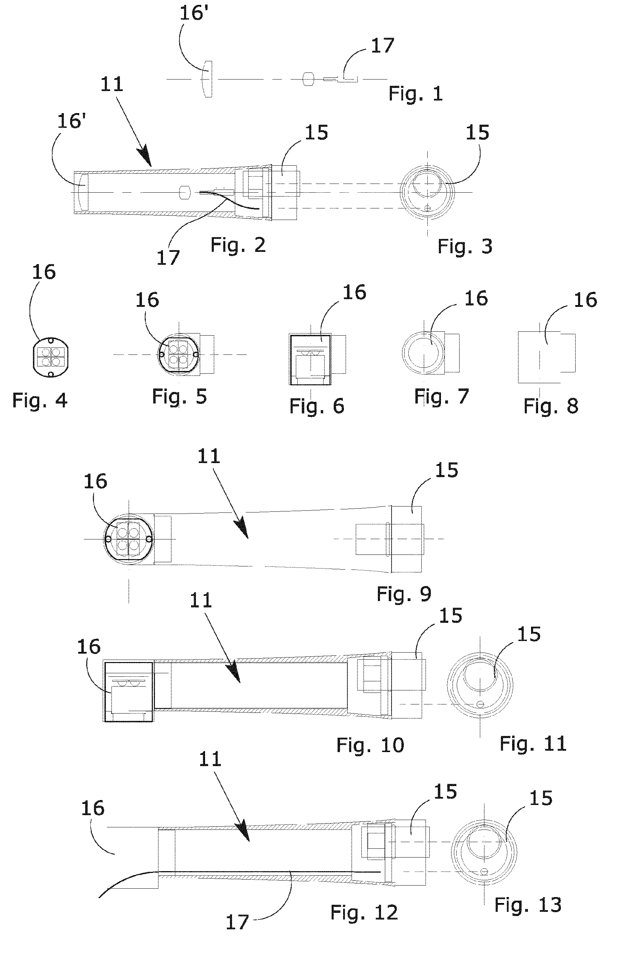

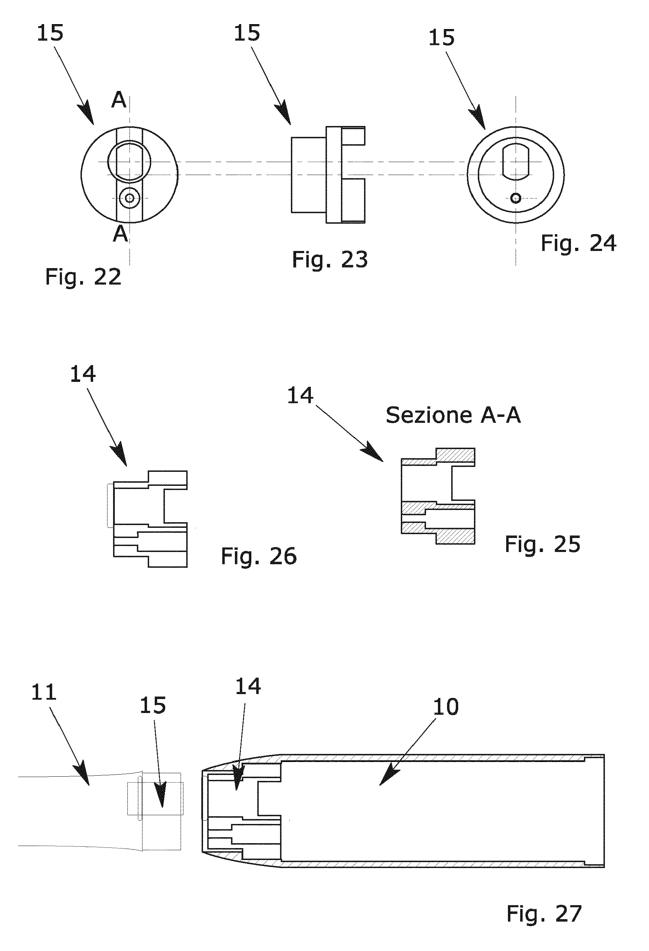

The terminal 11 can be of various types depending on the application and in any case comprises a coupling 15 shown in figures 22 to 24. Figure 1 shows the lens unit 16' which receives the laser beam from the fibre 17 which will be described below, said lens unit 16' being housed inside the handpiece 11, as can be seen in figure 2.

As can be seen in figures 4 to 8, the terminal 11 comprises several heads 16 which vary according to their use, and which can consist of LED heads for biostimulation, for polymerization, for white light and for polychromy.

An optic fibre 17 passes through each head and transmits the laser signal, the source of which consists of a diode generating a polarized laser light beam conveyed through the optic fibre.

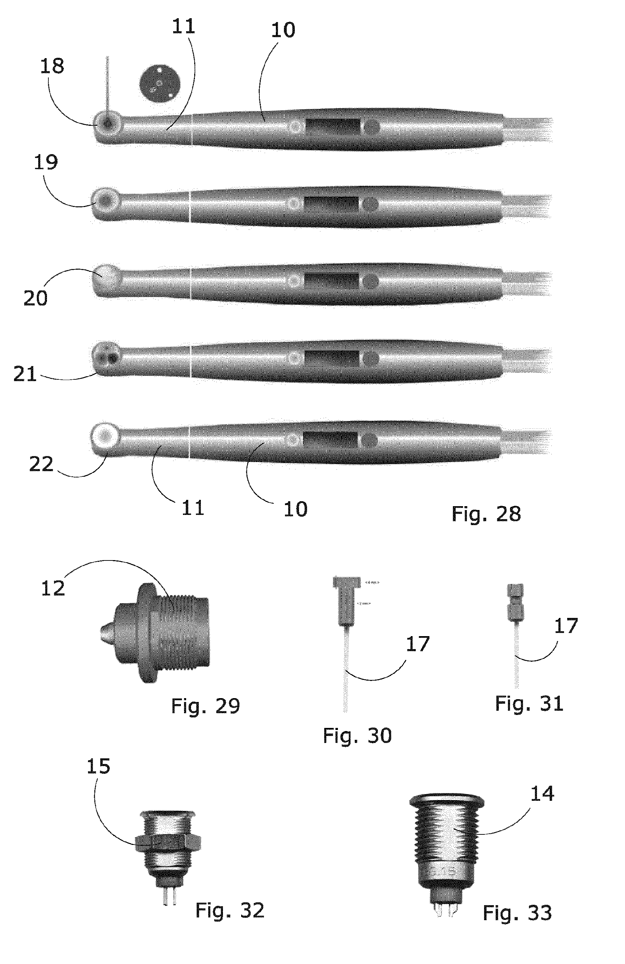

Figure 28 shows the various terminals which consist of the laser fibre terminal 18, for surgery or biostimulation, the collimator handpiece 19, for tissue biostimulation, the photopolymerizer 20, for photopolymerization of the filling material, the polychromy LED terminal 21, for polychromatic treatment, or chromotherapy, and the white light LED terminal 22.

Through the use of the DIODE LASER terminal, it is possible to carry out the following treatments.
1) Mucosal disorders: The bactericidal action of the laser beam creates the conditions for the healing of mouth ulcers and herpes, with rapid and surprising results without the need for anesthesia. 1.0 Watt continuous mode.
2) Dentinal hypersensitivity: In association with a fluoride gel, the action of the laser beam determines the sealing of dentinal tubules with an immediate and long-lasting desensitizing effect. 1.0 Watt continuous mode.
3) Whitening: In the whitening of vital and devitalised teeth, the application of the laser together with a specific gel ensures maximum whitening action in a very short time, with minimal heat variations thus preserving pulp vitality. 1.0 Watt continuous mode.
4) Biostimulation: the adopted wave length of 810 nm +/-10nm proved ideal, also as Softlaser. Acting on the mitochondrial photoreceptors of the cells stimulates growth and accelerates the healing process with limited postoperative symptoms.

As far as paradontology endodontic surgery is concerned, the features of the DIOE LASER light optimise healing times, do not cause muscular tremor (an important feature when used in esthetic zones, such as the lips for example) and can also be used on patients with a pacemaker. The DIODE LASER is often used without the need to resort to local anesthesia; it also sterilises the treated tissue and this has the advantage of reducing or eliminating pharmacological treatment in the postoperative period. Another very important factor of the diode laser concerns the excellent hemostatic features, meaning that occasion requiring sutures after an operation are extremely rare.

### • A CHROMOTHERAPY LIGHT.

CHROMOESTHETICS consists of irradiating the areas of the body with different coloured light to obtain an esthetic advantage. It can be integrated with traditional beauty treatments in order to reinforce and speed up the final result.

This is a new method that considers unsightliness as a discordant vibration of the cells of a certain area of the body which can be rebalanced by exploiting energy and thus the vibration of one or more specific colours.

With CHROMOESTHETICS, before acting it is necessary to identify the unsightliness, evaluating its features in order to choose the appropriate colour or colours for its repair.

With the energy of the colour it is therefore possible to exert a global inflow on the body, in particular through the skin, and once the physical dysfunction has been eliminated then the patient's way of thinking and emotivity in general are modified

Due to its completeness and specificity, CHROMOESTHETICS is ideal for treating the health and beauty of the body and the mind.

CHROMOESTHETICS can be applied according to 3 different methods:
1. The first consists of a natural treatment of the unsightly area, directly projecting the colour on the skin, making the two vibrations (unsightly area/colour) interact with each other.
   The luminous energy and its frequency react with the discordant vibrations of the unsightly area, restoring the skin to its correct cellular equilibrium.
   The altered function of a cell body (e.g. skin on the face) corresponds to an intercellular oscillatory change with the consequent dysfunctions due to a complex chemical - physical variation of interaction between one cell and another (e.g. reduced production of collagen).
   By interacting with the correct frequency of coloured light, it is possible to restore cellular homeostasis with the result of a remission of the chemical - physical variation and the consequent improvement in biological function.
2. The second method consists of a reinforcement of the classic beauty treatments, that is to say those that combine manual treatment with the use of a product. This is mainly based on irradiation, with the appropriate colour, of the product already applied. An effective result, thus producing clearly visible results since, being based on the interaction between the energy of the colour, the skin and the product:
   - the effect of the active substance of the product is reinforced; - the product is absorbed more easily and rapidly;
   - the skin becomes more receptive and thus absorbs the product better;
   - less product is used;
   The cosmetic products used with CHROMOESTHETICS must have specific features that are not found in all products and have the following particularities:
   - the natural active substances are stimulated and reinforced with the energy of the colour emitted by the light;
   - they do not contain paraffin which, in addition to being harmful to the skin, can act as a barrier to the energy of the light;
   - they contain salts and crystals and thermal trace elements that positively reflect the frequency of the light, thus facilitating the diffusion of the beneficial light and its absorption.
3. The third method consists of the interaction of the two previous methods. In this case, the skin is irradiated with the appropriate colour/s to prepare it for the treatment with the cosmetic products.
   A beneficial effect on the unsightly area is already produced and then further reinforced with the application of the specific product and the subsequent irradiation using the appropriate colour.

According to tests and research, this method is the most effective and the one that can produce the best effect (relaxation or revitalisation depend on the colour) on the person.

The qualities of the individual colours of the rainbow in beauty treatments:
RED. This colour is known as the great energy restorer; it is active against edema, temporary swelling, lymphatic and blood accumulation.

In the beauty sector it is mainly used in cases of rough, intoxicated and swollen skin as well as in nodular cellulitis (unless accompanied by circulation disorders). Red symbolises the rising sun.

It can be used in cases of greasy skin, with a tendency to acne and spots and thickened skin.

It is active in opaque skin with uneven colouring; unsightly areas (hypotenia, cellulitis, adiposity) due to digestive process imbalance and altered endocrine system functionality.

It acts in cases of soft edematous cellulitis.

It favours glossy hair, acts on greasy dandruff caused by excess sebaceous secretion.

It is the colour of relaxation. It is mainly used in cases of reddened, thin, tight and congested skin with dilated pores.

It has antiseptic and bactericidal properties, and soothes scalds and overheated skin. It acts against wrinkles caused by stress and overtight features.

It is also active against cellulitis caused by stress.

Chromoesthetic treatments can be used for:
CHROMOESTHETIC FACIAL TREATMENTS;
   - SKIN WITH ACNE;
   - OXYGEN-DEPRIVED SKIN;
   - SKIN LACKING TONE;
   - REDDENED SKIN;
   - DEHYDRATED SKIN;
   - GREASY SKIN;
   - MATURE SKIN;
   - PEELING WITH LIFTING EFFECT;
   - WRINKLES;
   - FACIAL SKIN RENEWAL;
   - CHROMOESTHETIC BODY TREATMENTS;
   - SKIN RENEWAL;
   - HANDS;
   - SAGGING BUST;
   - NODULAR CELLULITIS;
   - EDEMATOUR AND SOFT CELLULITIS;
   - LOCALISED SLIMMING;
   - adjustment independent of the intensity of the three LEDs by means of PWM;

Preset values:
1. RED: R=255 G=000 B=000
2. BLUE: R=000 G=000 B=255
3. GREEN: R=000 G=255 B=000
4. LIGHT BLUE: R=091 G=161 B=250
5. COBALT BLUE: R=000 G=050 B=065
6. CADMIUM YELLOW: R=255 G=000 B=000
7. DARK CHROME YELLOW: R= 255 G=197 B=000
8. LIGHT BROWN (BURNT SIENA): R=185 G=137 B=097
9. VERMILION RED: R=240 G=012 B=001
10. DARK BROWN (BEAVER): R=146 G=111 B=091
11. LIGHT GREEN: R=045 G=208 B=000
12. EMERALD GREEN: R=080 G=200 B=120
13. YELLOW GOLD: R=253 G=184 B=019
14. VIOLET: R=139 G=000 B=255

### • PHOTOPOLYMERIZING LIGHT

The polyermizing terminal allows polymerisation of adhesives, filling materials and cements, an essential aspect for the long life of restoration interventions.

The photopolymerizing tip uses the most modern high power LED technology with intensity greater than 1500mW/cm2 in order to achieve rapid and complete polymerization.

This device has 6 predefined polymerization programmes (5-10-15-20-40-60 sec) which make it possible to achieve complete polymerization on any type of material used.

The voltage of the device can vary from 10Vdc to 36Vdc, and this makes it possible to use the device by connecting it to a standard dental unit or in stand-alone mode using a medical type direct current power supply.

In summary, the device according to the invention has the particular feature of interchangeability between the terminals (body and 5 interchangeable tips) which carry out different functions:
1. diode laser with fibres;
2. biostimulation and whitening handpiece;
3. photopolymerizing light;
4. chromotherapy light;
5. white light to illuminate the working area.

This particular feature allows the operator to use a single device to carry out a wide variety of the main working activities of this field.

Another feature is the direct connection to the dental unit facilitating operations, and the possibility of using the various applications directly from the dental unit.

As already stated, the equipment described above was designed to also function with a dedicated power supply which allows its use without being connected to a dental unit.

The invention is described above with reference to a preferred embodiment. It is nevertheless clear that the invention is susceptible to numerous variations which lie within the scope of its disclosure, in the framework of technical equivalents.

## Claims

1. Instrumentation consisting of handpieces for units for dentists, doctors or paramedics, such as dermatologists or the like, **characterised in that** the central body or handpiece (10) can be connected to interchangeable multipurpose terminals (11) and **in that** the handpiece (10) consists of a rear part that houses a capsule (12) connected to the power cable and a front part (13) that houses the capsule (14) which allows attachment to the terminal (11) by means of a connector (15), these terminals (11) comprising a lens unit (16') which receives laser beams from an optic fibre (17) that passes through the body (10) entering the terminal (11) from the power cable connected to the capsule (12), the optic fibre (17) transmitting the laser signal whose source consists of a diode generating a polarised laser light beam, said terminals (11) being of various types and interchangeable according to the application.

2. Instrumentation consisting of handpieces for dental units according to the foregoing claim, **characterised in that** the terminal (11) comprises several heads (16) which vary according to their use, and which can consist of LED heads for biostimulation, for polymerization, for white light and for polychromy.

3. Instrumentation consisting of handpieces for dental units according to either of the foregoing claims, **characterised in that** an optic fibre (17) passes through each head and transmits the laser signal, the source of which consists of a diode generating a polarized laser light beam conveyed through the optic fibre.

4. Instrumentation consisting of handpieces for dental units according to any of the foregoing claims, **characterised in that** the various terminals consist of the laser fibre terminal (18), for surgery or biostimulation, the collimator handpiece (19), for tissue biostimulation, the photopolymerizer (20), for photopolymerization of the filling material, the polychromy LED terminal (21), for polychromatic treatment, or chromotherapy, and the white light LED terminal (22).

5. Instrumentation consisting of handpieces for dental units according to any of the foregoing claims, **characterised in that** the interchangeable terminals (11) comprise heads consisting of at least:
a) A photopolymerizing light;
b) A biostimulation and whitening light;
c) A diode laser;
d) A white light to illuminate the working area;
e) A chromotherapy light.

6. Instrumentation consisting of handpieces for dental units according to any of the foregoing claims, **characterised in that** the interchangeable component equipment is also designed to function with a dedicated power supply to allow its use without being connected to a dental unit.
